# EUROPÄISCHE PATENTSCHRIFT

(11) **EP 2 040 958 B1**
(45) Veröffentlichungstag und Bekanntmachung des Hinweises auf die Patenterteilung: **03.03.2010**
(21) Anmeldenummer: 07765508.2
(22) Anmeldetag: 20.06.2007
(51) Int. Cl.: B60R 21/20

(54) **AIRBAGMODUL FÜR EIN KRAFTFAHRZEUG**
AIRBAG MODULE FOR A MOTOR VEHICLE
MODULE D'AIRBAG DESTINÉ À UN VÉHICULE

(30) Priorität: 18.07.2006 DE 102006033895
(43) Veröffentlichungstag der Anmeldung: 01.04.2009
(73) Patentinhaber: Takata-Petri AG, 63743 Aschaffenburg (DE)
(72) Erfinder: BASTEN, Silvan, 64409 Messel (DE)
(74) Vertreter: Baumgärtel, Gunnar
(86) Internationale Anmeldenummer: PCT/EP2007/056103
(87) Internationale Veröffentlichungsnummer: WO 2008/009532

(56) Entgegenhaltungen:
- DE-A1- 10 114 208
- DE-U1- 9 101 099
- DE-U1-202005 011 878
- DE-U1-202006 005 319
- US-A1- 2006 125 215

## Beschreibung

Die Erfindung betrifft ein Airbagmodul für ein Kraftfahrzeug gemäß dem Oberbegriff des Anspruchs 1 und ein Verfahren zum Herstellen eines derartigen Airbagmoduls. Ein solches Airbagmodul ist z.B. aus dem Dokument DE 20 2006 005 319 U1 bekannt.

Ein solches Airbagmodul umfasst einen Gassack, der zum Schutz einer Person mit Gas aufblasbar ist sowie eine den Gassack gasdicht umschließende Schutzhülle, die zumindest bereichsweise aus einer flexiblen, faltbaren Schutzfolie gebildet ist.

Der Erfindung liegt das Problem zugrunde, ein Airbagmodul sowie ein Verfahren zur Herstellung eines Airbagmoduls der eingangs genannten Art mit einer verbesserten Schutzhülle bereitzustellen.

Dieses Problem wird erfindungsgemäß durch die Schaffung eines Airbagmoduls mit den Merkmalen des Anspruchs 1 gelöst.

Danach ist vorgesehen, dass die Schutzfolie einen gasdichten Schwächungsbereich aufweist, an dem entlang die Schutzfolie sich öffnet, wenn der Gassack beim Aufblasen gegen die Schutzfolie drückt.

Da die Schutzfolie beim Aufblasen des Gassackes nunmehr vordefinierbar entlang des Schwächungsbereiches aufreißt, bringt die Erfindung den Vorteil mit sich, dass ein undefiniertes Reißen bzw. Separieren von Teilen der Schutzfolie verhindert wird.

Hierdurch wird die Reproduzierbarkeit des Aufblasvorganges des Gassackes verbessert.

Aufgrund der Gasdichtigkeit des Schwächungsbereiches (der Schwächungsbereich bildet gleichzeitig eine Gasbarriere) wird zudem ein Eindringen von Gasen über den Schwächungsbereich in die Schutzhülle vor dem Aufblasen des Gassackes verhindert, so dass die Gasdichtigkeit der Schutzhülle vor dem Aufblasen des Gassackes gewährleistet ist.

Besonders bevorzugt ist der Schwächungsbereich einstückig mit der Schutzfolie ausgebildet, wobei die Schutzfolie durch den Schwächungsbereich und einen den Schwächungsbereich umgebenden zweiten Bereich gebildet ist, der im Querschnitt eine größere Dicke als der Schwächungsbereich aufweist.

Der solchermaßen ausgebildete Schwächungsbereich ist vorteilhaft einfach aufgebaut und lässt sich dementsprechend einfach herstellen, beispielsweise durch ein Verformen der Schutzfolie mittels eines Tiefziehprozesses.

Vorzugsweise ist der Schwächungsbereich längs erstreckt ausgebildet, wobei er sich in einem Ausführungsbeispiel bevorzugt entlang einer gekrümmten Bahn erstreckt, die insbesondere U-förmig ausgebildet ist. Der Schwächungsbereich weist dementsprechend zwei freie Enden auf, wobei der Schwächungsbereich bevorzugt im Querschnitt eine Dicke aufweist, die zu den freien Enden des Schwächungsbereiches hin monoton bis zur Dicke des zweiten Bereiches anwächst, die so bemessen ist, dass der zweite Bereich abseits des Schwächungsbereiches bei den beim Aufblasen des Gassackes üblicherweise auf den zweiten Bereich einwirkenden Kräfte nicht einreißt. Auf diese Weise wird mit Vorteil ein undefiniertes Weiterreißen des Schwächungsbereiches über die freien Enden des Schwächungsbereiches hinaus kontrolliert verhindert. Durch das kontinuierliches Ansteigen der Dicke des Schwächungsbereiches auf den Wert der Dicke des den Schwächungsbereich umgebenden zweiten Bereiches der Schutzfolie wird die dem Weiterreißen entgegengebrachte Kraft allmählich (kontrolliert) gesteigert.

In Abhängigkeit von der Technik, mit der der Schwächungsbereich in die Schutzfolie eingebracht wird, existiert natürlich grundsätzlich ein den Schwächungsbereich umgebender Grenzbereich, in dem die Dicke des Schwächungsbereiches auf die Dicke des den Schwächungsbereich und den Grenzbereich umgebenden zweiten Bereiches anwächst. Die Zunahme der Dicke des Schwächungsbereiches zu den freien Enden des Schwächungsbereiches hin erfolgt dabei aber grundsätzlich mit einer substantiell geringeren Zunahme der Dicke pro Längeneinheit.

Vorliegend bezieht sich die Dicke des Schwächungsbereiches bzw. des zweiten Bereiches der Schutzfolie auf die Dicke des Querschnittes der Schutzfolie, d. h., die Dicke entlang einer Richtung, die jeweils senkrecht auf der fiktiven Fläche steht, die durch die Schutzfolie aufspannt wird.

Entscheidend ist, dass die Dicke des Schwächungsbereiches im Querschnitt um soviel geringer ist als die Dicke des zweiten Bereiches im Querschnitt, dass die Schutzfolie beim Aufblasen des Gassackes entlang des Schwächungsbereiches vordefinierbar aufreißt.

In einem Ausführungsbeispiel ist der Betrag der Dicke des zweiten Bereiches im Wesentlichen konstant und liegt insbesondere im Bereich von 70 bis 200 µm.

In einem anderen Ausführungsbeispiel variiert die Dicke des zweiten Bereiches und schwankt dabei insbesondere im Bereich von 70 bis 200 µm. Durch ein derartiges Schwanken der Querschnittsdicke des zweiten Bereiches lässt sich das Dehnungsverhalten der Schutzfolie während des Aufblasens mit Vorteil steuern.

Gegenüber der Dicke des zweiten Bereiches weist der Schwächungsbereich im Querschnitt vorzugsweise eine Dicke von 50 µm oder weniger auf.

In der Erfindung ist der Schwächungsbereich im Querschnitt sackförmig ausgebildet. Eine derartige sackförmige Ausbildung des Schwächungsbereiches im Querschnitt entsteht beispielsweise dadurch, dass der Schwächungsbereich durch Dehnen der Schutzfolie, beispielsweise Tiefziehen ausgebildet wird.

In einer Variante der Erfindung ist vorgesehen, dass der sackförmig ausgebildete Schwächungsbereich zum zweiten Bereich der Schutzfolie hin gefaltet ist, so dass er, am zweiten Bereich anliegend, zwischen der Schutzfolie und dem darunter liegendem Gassack angeordnet ist.

Die Schutzfolie selbst ist vorzugsweise einlagig aufgebaut und besteht bevorzugt aus einem Kunststoff, vorzugsweise einem thermoplastischen Kunststoff. Dies erlaubt ein einfaches Verformen der Schutzfolie zum Ausbilden des Schwächungsbereiches.

Vorzugsweise ist die den Gassack gasdicht umschließende Schutzhülle vollständig als Schutzfolie ausgebildet. Weiterhin ist die Schutzfolie bevorzugt evakuiert, so dass sie eng am Gassack anliegt. Der Gassack kann dabei zu einem Gassackpaket gefaltet sein, wobei durch das Evakuieren der den Gassack umgebenden Schutzhülle eine vorteilhaft kompakte Form des Gassackpaketes aufrechterhalten wird. Unter einem Evakuieren der Schutzhülle wird vorliegend ein Bereitstellen eines Druckes in der Schutzhülle verstanden, der substantiell kleiner ist als der Druck in dem die Schutzhülle umgebenden Außenraum.

Es ist auch möglich, dass die Schutzhülle teilweise durch eine gehäuseartige Hülle und teilweise durch eine Schutzfolie gebildet wird. In diesem Fall kann die Schutzfolie eine Deckfläche der gehäuseartigen Hülle verschließen. Die gehäuseartige Hülle kann elastisch deformierbar ausgebildet sein. Für den Fall, dass die Schutzhülle vollständig als eine Schutzfolie ausgebildet ist, kann ein Modulgehäuse vorgesehen sein, das den Gassack und die Schutzfolie zumindest teilweise umgibt.

Weiterhin wird das der Erfindung zugrunde liegende Problem durch ein Verfahren zur Herstellung eines erfindungsgemäßen Airbagmoduls gelöst, wobei das erfindungsgemäße Verfahren die folgenden Schritte umfasst:
- Bereitstellen einer Schutzhülle zum gasdichten Umhüllen eines dem Schutz einer Person dienenden aufblasbaren Gassackes, wobei die Schutzhülle zumindest teilweise aus einer flexiblen Schutzfolie gebildet ist, und
- Ausbilden eines gasdichten Schwächungsbereiches an der Schutzfolie.

Der Schwächungsbereich wird durch Dehnen der Schutzfolie ausgebildet, und zwar derart, dass der Schwächungsbereich im Querschnitt eine geringere Dicke aufweist als ein den Schwächungsbereich umgebender zweiter Bereich, der zusammen mit dem Schwächungsbereich die Schutzfolie bildet. Das Verformen bzw. Dehnen erfolgt dabei bevorzugt mittels Tiefziehen der Schutzfolie. Zum Tiefziehen der Schutzfolie können dabei zwei Werkzeuge verwendet werden, von denen das eine eine Positivform und das andere eine entsprechende Negativform aufweist, so dass der Schwächungsbereich nach dem Umformen im Querschnitt sackförmig ausgebildet ist. Oder anders gesagt, das eine Werkzeug weist eine Positivform auf, mit der die Schutzfolie unter Dehnung und Ausbildung des im Querschnitt sackförmigen Schwächungsbereiches in die Negativform des zweiten Werkzeuges gedrückt (tiefgezogen) wird.

Es ist weiter möglich, mit nur einem Werkzeug zu arbeiten. So kann z. B. die Schutzfolie mittels eines Unterdruckes in die Negativform eines einzelnen Werkzeuges unter Ausbildung eines im Querschnitt sackförmigen Schwächungsbereiches eingesaugt werden.

Um ein geringes Packmaß zu erreichen, wird der im Querschnitt sackförmig ausgebildete Schwächungsbereich zum zweiten Bereich der Schutzfolie hin gefaltet.

In einer Variante des erfindungsgemäßen Verfahrens wird der Gassack nach dem Ausbilden des Schwächungsbereiches mit der Schutzhülle gasdicht umhüllt. Alternativ hierzu kann der Gassack auch vor dem Ausbilden des Schwächungsbereiches mit der Schutzhülle umhüllt werden. In diesem Fall wird der Schwächungsbereich beispielsweise mittels eines Unterdruckes in eine Negativform eines Tiefziehwerkzeuges eingesaugt, so dass sich ein im Querschnitt sackförmiger Schwächungsbereich ergibt, der in den die Schutzhülle umgebenden Außenraum absteht und natürlich auch auf den zweiten Bereich der Schutzhülle gefaltet werden kann.

Bevorzugt wird der Gassack vor dem Umhüllen mit der Schutzhülle bzw. Schutzfolie zu einem Gassackpaket zusammengelegt. Für den Fall, dass die Schutzhülle vollständig aus einer Schutzfolie, insbesondere einer Kunststofffolie aufgebaut ist, wird der Gassack bevorzugt in der Schutzhülle eingeschweißt.

Vorzugsweise wird die Schutzhülle nach dem Umhüllen des Gassackes mit der Schutzhülle evakuiert, so dass sich die Schutzhülle eng an den Gassack (Gassackpaket) anlegt, wodurch ein vorteilhaft kleines Packmaß erreicht wird.

Weitere Einzelheiten und Vorteile der Erfindung werden bei der nachfolgenden Beschreibung von Ausführungsbeispielen anhand der Figuren deutlich werden.

Es zeigen:
- Fig. 1: eine schematische Draufsicht auf ein Airbagmodul mit einem durch eine Schutzhülle in Form einer Schutzfolie umschlossenen Gassack, wobei die Schutzfolie einen U-förmigen Schwächungsbereich aufweist,
- Fig. 2: einen Schnitt entlang der Linie II - II der Figur 1, vor einem Falten des im Querschnitt sackförmigen Schwächungsbereiches zur Schutzfolie hin,
- Fig. 2a: einen Schnitt entlang der Linie II - II der Figur 1,
- Fig. 3: einen Schnitt entlang der Linie III - III der Figur 1, vor einem Falten des Schwächungsbereiches zur Schutzfolie hin, und
- Fig. 4: eine schematische Querschnittsdarstellung eines Tiefziehvorganges zur Ausbildung eines im Querschnitt sackförmigen Schwächungsbereiches an der Schutzfolie des Airbagmoduls.

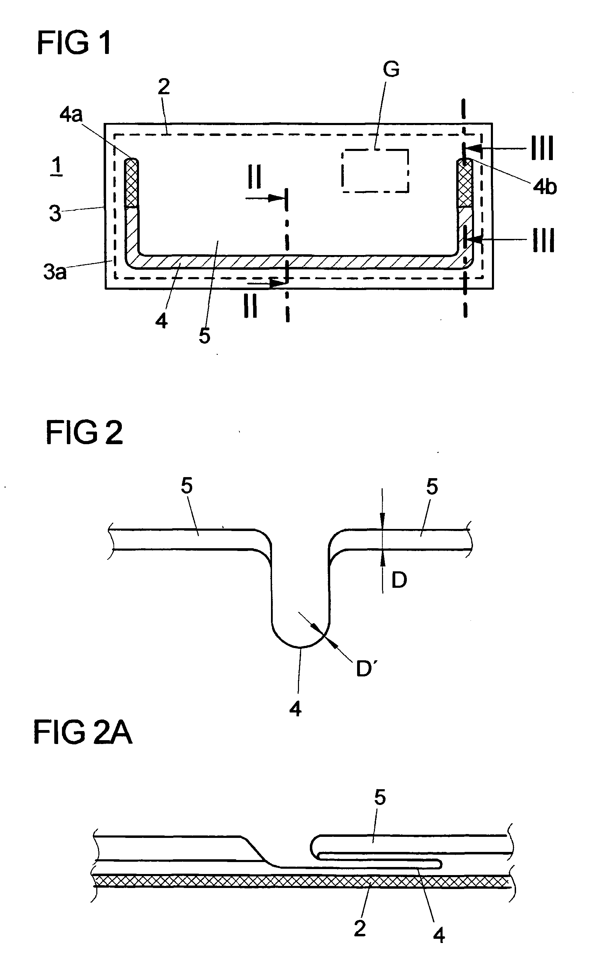

Figur 1 zeigt eine schematische Draufsicht auf ein Airbagmodul 1 mit einem Gassack 2, der von einer Schutzhülle in Form einer Schutzfolie 3 gasdicht umschlossen ist. Der Gassack 2 ist in der Figur 1 durch eine gestrichelte Linie angedeutet. Zum Aufblasen des Gassackes 2 ist ein Gasgenerator G vorgesehen (in der Figur 1 durch eine strichpunktierte Linie angedeutet), der vorzugsweise in einem vom Gassack 2 umgebenen Innenraum des Gassackes 2 angeordnet ist. Bei dem Gasgenerator G kann es sich um einen Kaltgasgenerator handeln, in dem ein Gas gespeichert ist, das bei Zündung des Gasgenerators G freigesetzt wird, oder es kann sich um einen so genannten Heißgenerator handeln, der chemische Stoffe bzw. Verbindungen enthält, die nach dem Zünden des Gasgenerators G das freizusetzende Gas erzeugen. Es ist auch möglich, den Gasgenerator G als einen Hybridgasgenerator auszubilden, in dem einerseits das Gas gespeichert ist und der andererseits eine chemische Verbindung zur Erzeugung zusätzlicher Heißgase enthält. Die Zündung des Gasgenerators G kann elektrisch erfolgen über eine mit dem Zünder des Gasgenerators G verbundene elektrische Leitung.

Wird der Gasgenerator G gezündet, dehnt sich der Gassack 2 in Folge des Befüllens des Gassackes 2 mit Gas aus und drückt von dem durch die Schutzfolie 3 umgebenden Innenraum her gegen die Schutzfolie 3.

Damit die Schutzfolie 3 infolgedessen nicht unkontrolliert aufreißt, ist an einer einem zu schützenden Fahrzeuginsassen zugewandten Oberseite 3a der Schutzfolie 3 ein U-förmig längs erstreckter Schwächungsbereich 4 vorgesehen derart, dass die Oberseite 3a der Schutzfolie 3 entlang dieses Schwächungsbereiches 4 aufreißt, wenn der Gassack 2 beim Aufblasen gegen die Oberseite 3a der Schutzhülle 3 drückt.

Der Schwächungsbereich 4 wird dabei durch einen Bereich der Schutzhülle 3 gebildet, der im Vergleich zu einem den Schwächungsbereich 4 begrenzenden zweiten Bereich 5, der zusammen mit dem Schwächungsbereich 4 die Schutzfolie 3 bildet, im Querschnitt eine Dicke D' aufweist, die geringer ist als eine Dicke D des zweiten Bereichs 5 der Schutzfolie 3. In Abhängigkeit des für die Schutzfolie 3 verwendeten Materials wird die Dicke D' des Schwächungsbereiches 4 derart bemessen, dass die Schutzfolie 3 entlang des Schwächungsbereiches 4 (U-förmig) aufreist, wenn der Gassack 2 mit einer Kraft gegen die Oberseite 3a der Schutzfolie 3 drückt, die über einer der Dicke D' des Schwächungsbereiches 4 entsprechenden Schwellenkraft liegt. Die Dicke D des zweiten Bereiches 5 ist dabei mindestens so groß, dass ein Einreißen des Schwächungsbereiches 4 nicht auf den zweiten Bereich 5 übergreifen kann.

Aufgrund der U-förmigen Ausbildung des Schwächungsbereiches 4 bildet der durch den Schwächungsbereich 4 begrenzte Teil der Oberseite 3a der Schutzfolie 3 nach dem Aufreißen der Schutzfolie 3 entlang des Schwächungsbereiches 4 eine zum Außenraum schwenkbare (flexible) Klappe.

In der Figur 1 umhüllt die Schutzfolie 3 den Gassack 2 vollständig, wobei der Gassack 2 bevorzugt in die Schutzfolie 3 eingeschweißt ist. Es ist aber auch möglich, dass die Schutzhülle 3 des Airbagmoduls 1 aus einer teilweise gehäuseartigen Hülle gebildet ist, wobei lediglich die Oberseite 3a der Schutzhülle 3 aus einer Schutzfolie ausgebildet ist, die die gehäuseartige Hülle der Schutzhülle 3, und zwar eine Deckfläche der gehäuseartigen Hülle, verschließt.

Figur 2 zeigt eine schematische Schnittdarstellung entlang der Linie II - II der Figur 1. Danach ist der an der Oberseite 3a der Schutzfolie 3 ausgebildete Schwächungsbereich 4 im Querschnitt sackförmig ausgeformt. Beim fertig aufgebauten Airbagmodul 1 kann dieser sackförmig ausgebildete Schwächungsbereich 4 in den das Airbagmodul 1 umgebenden Außenraum abstehen oder kann gemäß Figur 2a zum zweiten Bereich 5 der Schutzfolie 3 hin gefaltet sein, so dass er - ein geringes Packmaß gewährleistend - zwischen einer Lage des Gassackes 2 und dem zweiten Bereich 5 der Schutzfolie 3 angeordnet ist, wobei er sowohl am zweiten Bereich 5 als auch an der Lage des Gassackes 2 eng anliegt.

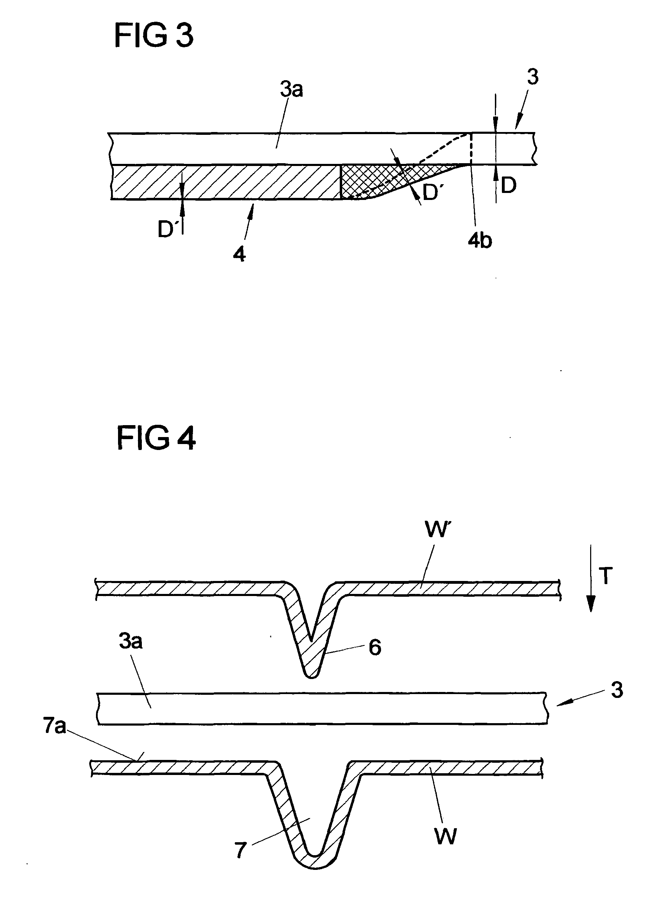

Figur 4 zeigt schematisch die Herstellung eines Schwächungsbereiches 4 gemäß der Figuren 1 bis 3. Hierbei wird die Schutzfolie 3 derart bezüglich eines ersten Werkzeuges W positioniert, dass die Oberfläche 3a eine Negativform 7 des ersten Werkzeuges W in Form einer U-förmig entlang des ersten Werkzeuges W erstreckten Ausnehmung verdeckt, wobei die Oberseite 3a der Schutzfolie 3 unter Vorspannung an einer der Oberseite 3a zugewandten Innenseite 7a des ersten Werkzeuges W angeordnet ist, so dass die Oberseite 3a die Negativform 7 straff überdeckt. Zum Ausbilden des Schwächungsbereiches 4 an der Oberseite 3a der Schutzfolie 3 wird nun ein zweites Werkzeug W' mit einer der Negativform 7 entsprechenden Positivform 6 voran von einer dem ersten Werkzeug W abgewandten Seite der Oberseite 3a her entlang einer ersten Richtung T, die quer zur Oberfläche 3a verläuft, gegen die straff gespannte Oberseite 3a gedrückt, bis die Positivform 6 unter Zwischenlage eines Bereiches der Oberseite 3a, der nunmehr den Schwächungsbereich 4 bildet, die Negativform 7 ausfüllt.

Dieses Tiefziehverfahren ist natürlich nicht nur auf U-förmige Schwächungsbereiche 4 beschränkt; andere Verlaufsformen des Schwächungsbereiches 4 sind ebenso realisierbar. Für den Fall, dass nur mit einem einzelnen (ersten) Werkzeug W gearbeitet werden soll, kann in der Negativform 7 ein Unterdruck bereitgestellt werden, der einen Bereich der Oberseite 3a der Schutzfolie 3 in die Negativform 7 hineinzieht, bis dieser Bereich - unter Ausbildung des Schwächungsbereiches 4 - die Negativform 7 vollständig auskleidet.

Damit der U-förmige Schwächungsbereich 4 nicht (entlang der beiden freien Schenkel des U-förmigen Schwächungsbereiches 4) über seine freien Enden 4a, 4b hinaus einreißen kann, nimmt die Dicke D' des Schwächungsbereiches 4 im Querschnitt zu den beiden freien Enden 4a, 4b des Schwächungsbereiches 4 hin zu. Dementsprechend nimmt die Sackförmigkeit des Schwächungsbereiches 4 gemäß dem in der Figur 3 gezeigten Querschnitt des Schwächungsbereiches 4 entlang der Linie III - III der Figur 1 zu den beiden freien Enden 4a, 4b des Schwächungsbereiches 4 hin ab.

Bei der Herstellung des Schwächungsbereiches 4 gemäß dem in der Figur 4 schematisch dargestellten Verfahren kann eine Abnahme der Dicke D' des Schwächungsbereiches 4 zu den freien Enden 4a, 4b des Schwächungsbereiches 4 hin dadurch erreicht werden, indem die Tiefe der Negativform 7 entlang der ersten Richtung T und entsprechend die Ausdehnung der Positivform 6 entlang der ersten Richtung T an den den freien Enden 4a, 4b des Schwächungsbereiches 4 zugeordneten Abschnitten der Negativform 7 bzw. der Positivform 6 kontinuierlich bis auf Null verringert wird.

Die beim Tiefziehprozess und bei der Handhabung der Schutzfolie 3 mit der Schutzfolie 3 in Berührung gelangenden Teile (Bereiche) des ersten und zweiten Werkzeuges W, W' sollten nicht scharfkantig ausgestaltet sein, um eine Beschädigung der Schutzfolie 3 bei der Herstellung oder in der späteren Handhabung (Entnahme der Schutzfolie 3 aus den Werkzeugen W, W') zu vermeiden.

## Patentansprüche

1. Airbagmodul für ein Kraftfahrzeug, mit:
- einem Gassack, der zum Schutz einer Person mit Gas aufblasbar ist, und
- einer den Gassack gasdicht einschließenden Schutzhülle, die zumindest teilweise aus einer flexiblen Schutzfolie gebildet ist,
- wobei die Schutzfolie (3) einen gasdichten Schwächungsbereich (4) aufweist, an dem entlang die Schutzfolie (3) aufreißt, wenn der Gassack (2) beim Aufblasen gegen die Schutzfolie (3) drückt,
- wobei die Schutzfolie (3) durch den Schwächungsbereich (4) und einen den Schwächungsbereich (4) begrenzenden zweiten Bereich (5) gebildet ist, wobei der Schwächungsbereich (4) im Querschnitt eine geringere Dicke (D') aufweist als der zweite Bereich (5).
**dadurch gekennzeichnet,**
**dass** der Schwächungsbereich (4) durch Dehnen der Schutzfolie (3) im Querschnitt sackförmig ausgebildet ist, wobei der Schwächungsbereich (4) zumindest abschnittsweise zum zweiten Bereich (5) hin gefaltet ist oder in einen Außenraum absteht.

2. Airbagmodul nach Anspruch 1, **dadurch gekennzeichnet, dass** der Schwächungsbereich (4) einstückig mit der Schutzfolie (3) ausgebildet ist.

3. Airbagmodul nach einem der vorangegangenen Ansprüche, **dadurch gekennzeichnet, dass** der Schwächungsbereich (4) U-förmig ausgebildet ist.

4. Airbagmodul nach Anspruch 3, **dadurch gekennzeichnet, dass** der Schwächungsbereich (4) zwei freie Enden (4a, 4b) aufweist.

5. Airbagmodul nach Anspruch 4, **dadurch gekennzeichnet, dass** die Dicke (D') des Schwächungsbereiches (4) zu den freien Enden (4a, 4b) des Schwächungsbereiches (4) hin anwächst.

6. Airbagmodul nach einem der vorhergehenden Ansprüche, **dadurch gekennzeichnet, dass** der Betrag der Dicke (D) des zweiten Bereiches (5) konstant ist und insbesondere im Bereich von 70 bis 200 Mikrometern liegt.

7. Airbagmodul nach einem der Ansprüche 1 bis 5, **dadurch gekennzeichnet, dass** der Betrag der Dicke (D) des zweiten Bereiches (5) variiert, insbesondere im Bereich von 70 bis 200 Mikrometern.

8. Airbagmodul nach einem der vorhergehenden Ansprüche, **dadurch gekennzeichnet, dass** die Dicke (D') des Schwächungsbereiches (4) 50 Mikrometer oder weniger beträgt.

9. Airbagmodul nach einem der vorangegangenen Ansprüche, **dadurch gekennzeichnet, dass** die Schutzfolie (3) aus einem Kunststoff besteht, insbesondere einem thermoplastischen Kunststoff.

10. Airbagmodul nach einem der vorangegangenen Ansprüche, **dadurch gekennzeichnet, dass** die Schutzhülle evakuiert ist.

11. Verfahren zum Herstellen eines Airbagmoduls nach einem der vorangegangenen Ansprüche, umfassend die folgenden Schritte:
- Bereitstellen einer Schutzhülle zum gasdichten Umhüllen eines dem Schutz einer Person dienenden aufblasbaren Gassackes (2), wobei die Schutzhülle zumindest teilweise aus einer flexiblen Schutzfolie (3) gebildet ist, und
- Ausbilden eines gasdichten Schwächungsbereiches (4) an der Schutzfolie (3), wobei der Schwächungsbereich (4) durch Dehnen der Schutzfolie (3) im Querschnitt sackförmig ausgebildet wird,
- wobei der Schwächungsbereich (4) durch Verformen der Schutzfolie (3) ausgebildet wird derart, dass der Schwächungsbereich (4) im Querschnitt eine geringere Dicke (D') aufweist als ein den Schwächungsbereich (4) umgebender zweiter Bereich (5), der zusammen mit dem Schwächungsbereich (4) die Schutzfolie (3) bildet,
- wobei der Schwächungsbereich (4) zumindest abschnittsweise zum zweiten Bereich (5) hin gefaltet wird oder in einen Außenraum absteht.

12. Verfahren nach Anspruch 11, **dadurch gekennzeichnet, dass** das Verformen durch Tiefziehen der Schutzfolie (3) erfolgt.

13. Verfahren nach Anspruch 11 oder 12, **dadurch gekennzeichnet, dass** die Schutzfolie (3) beim Verformen zusätzlich erwärmt wird.

14. Verfahren nach einem der Ansprüche 11 bis 13, **dadurch gekennzeichnet, dass** der Gassack (2) vor dem Ausbilden des Schwächungsbereiches (4) mit der Schutzhülle gasdicht umhüllt wird.

15. Verfahren nach einem der Ansprüche 11 bis 14, **dadurch gekennzeichnet, dass** die Schutzhülle nach dem Umhüllen des Gassackes (2) mit der Schutzhülle evakuiert wird.

## Claims

1. An airbag module for a motor vehicle comprising:
- an airbag, which may be inflated with gas to protect a person, and
- a protective envelope enclosing the airbag in a gas-tight manner, which is formed at least partially from a flexible protective film,
- the protective film (3) comprising a gas-tight weakened region (4), along which the protective film (3) tears open when the airbag (2) presses against the protective film (3) during inflation,
- wherein the protective film (3) is formed by the weakened region (4) and a second region (5) definiting the weakened region (4), the weakened region (4) having a smaller thickness (D') in cross section than the second region (5).
**characterized in that**
the weakened region (4) is configured to be bag-shaped in cross section by stretching the protective film (3), wherein the weakened region (4) is at least partially folded towards the second region (5) or protrudes towards an exterior space.

2. The airbag module as claimed in claim 1, **characterized in that** the weakened region (4) is configured integrally with the protective film (3).

3. The airbag module as claimed in one of the preceding claims, **characterized in that** the weakened region (4) is of U-shaped configuration.

4. The airbag module as claimed in claim 3, **characterized in that** the weakened region (4) has two free ends (4a, 4b).

5. The airbag module as claimed in claim 4, **characterized in that** the thickness (D') of the weakened region (4) increases towards the free ends (4a, 4b) of the weakened region (4).

6. The airbag module as claimed in one of the preceding claims, **characterized in that** the magnitude of the thickness (D) of the second region (5) is uniform and, in particular, is in the range of 70 to 200 micrometers.

7. The airbag module as claimed in one of claims 1 to 5, **characterized in that** the magnitude of the thickness (D) of the second region (5) varies, in particular in the range of 70 to 200 micrometers.

8. The airbag module as claimed in one of the preceding claims, **characterized in that** the thickness (D') of the weakened region (4) is 50 micrometers or less.

9. The airbag module as claimed in one of the preceding claims, **characterized in that** the protective film (3) consists of a plastics material, in particular a thermoplastic material.

10. The airbag module as claimed in one of the preceding claims, **characterized in that** the protective envelope is evacuated.

11. The method for producing an airbag module as claimed in one of the preceding claims, comprising the following steps:
- providing a protective envelope for encasing an inflatable airbag (2) in a gas-tight manner, serving to protect a person, the protective envelope being formed at least partially from a flexible protective film (3), and
- forming a gas-tight weakened region (4) on the protective film (3), the weakened region (4) being configured to be bag-shaped in cross section by stretching the protective film (3),
- wherein the weakened region (4) is configured by deforming the protective film (3), such that the weakened region (4) in cross section has a smaller thickness (D') than a second region (5) surrounding the weakened region (4) which, together with the weakened region (4), forms the protective film (3),
- wherein the weakened region (4) is at least partially folded towards the second region (5) or protrudes towards an exterior space.

12. The method as claimed in claim 11, **characterized in that** the deformation takes place by deep-drawing the protective film (3).

13. The method as claimed in claim 11 or 12, **characterized in that** the protective film (3) is additionally heated during deformation.

14. The method as claimed in one of claims 11 to 13, **characterized in that** the airbag (2) is encased in a gas-tight manner with the protective envelope, before forming the weakened region (4).

15. The method as claimed in one of claims 11 to 14, **characterized in that** the protective envelope is evacuated after encasing the airbag (2) with the protective envelope.

## Revendications

1. Module d'airbag pour un véhicule automobile, comprenant :
- un sac à gaz, qui peut être gonflé avec du gaz pour la protection d'une personne, et
- une enveloppe de protection qui enferme le sac à gaz de manière étanche au gaz et qui est formée au moins partiellement par une feuille protectrice flexible,
- dans lequel la feuille protectrice (3) comprend une zone affaiblie (4) étanche au gaz, au niveau de laquelle la feuille protectrice (3) se déchire quand le sac à gaz (2) vient pousser contre la feuille protectrice (3) lors du gonflage,
- dans lequel la feuille protectrice (3) est formée par la zone affaiblie (4) et par une seconde zone (5) qui délimite la zone affaiblie (4), et la zone affaiblie (4) présente en section transversale une épaisseur (D') plus faible que la seconde zone (5),
**caractérisé en ce que**
la zone affaiblie (4) est réalisée par allongement de la feuille protectrice (3) à la manière d'une poche en section transversale, et la zone affaiblie (4) est repliée au moins par tronçon vers la seconde zone (5), ou dépasse dans une zone extérieure.

2. Module d'airbag selon la revendication 1, **caractérisé en ce que** la zone affaiblie (4) est réalisée d'un seul tenant avec la feuille protectrice (3).

3. Module d'airbag selon l'une des revendications précédentes, **caractérisé en ce que** la zone affaiblie (4) est réalisée en forme de U.

4. Module d'airbag selon la revendication 3, **caractérisé en ce que** la zone affaiblie (4) présentes deux extrémités libres (4a, 4b).

5. Module d'airbag selon la revendication 4, **caractérisé en ce que** l'épaisseur (D') de la zone affaiblie (4) augmente vers les extrémités libres (4a, 4b) de la zone affaiblie (4).

6. Module d'airbag selon l'une des revendications précédentes, **caractérisé en ce que** la valeur de l'épaisseur (D) de la seconde zone (5) est constante, et se situe en particulier dans la plage de 70 à 200 µm.

7. Module d'airbag selon l'une des revendications 1 à 5, **caractérisé en ce que** la valeur de l'épaisseur (D) de la seconde zone (5) varie, en particulier dans la plage de 70 à 200 µm.

8. Module d'airbag selon l'une des revendications précédentes, **caractérisé en ce que** l'épaisseur (D') de la zone affaiblie (4) s'élève à 50 µm ou moins.

9. Module d'airbag selon l'une des revendications précédentes, **caractérisé en ce que** la feuille protectrice (3) est en matière plastique, en particulier une matière thermoplastique.

10. Module d'airbag selon l'une des revendications précédentes, **caractérisé en ce que** l'enveloppe de protection est évacuée.

11. Procédé pour réaliser un module d'airbag selon l'une des revendications précédentes, comprenant les étapes suivantes :
- préparation d'une enveloppe de protection pour envelopper de manière étanche au gaz un sac à gaz gonflable (2) servant à la protection d'une personne, ladite enveloppe de protection étant au moins partiellement réalisée d'une feuille protectrice flexible (3), et
- réalisation d'une zone affaiblie étanche au gaz (4) sur la feuille protectrice (3), ladite zone affaiblie (4) étant réalisée par allongement de la feuille protectrice (3) à la manière d'une poche en section transversale,
- dans lequel la zone affaiblie (4) est réalisée par déformation de la feuille protectrice (3) de telle manière que la zone affaiblie (4) présente en section transversale une épaisseur (D') plus faible qu'une seconde zone (5) qui entoure la zone affaiblie (4) et qui forme la feuille protectrice (3) conjointement avec la zone affaiblie (4),
- dans lequel la zone affaiblie (4) est repliée au moins par tronçon vers la seconde zone (5), ou bien dépasse dans une zone extérieure.

12. Procédé selon la revendication 11, **caractérisé en ce que** la déformation a lieu par emboutissage profond de la feuille protectrice (3).

13. Procédé selon la revendication 11 ou 12, **caractérisé en ce que** la feuille protectrice (3) est additionnellement chauffée pendant la déformation.

14. Procédé selon l'une des revendications 11 à 13, **caractérisé en ce que** le sac à gaz (2) est enveloppé de manière étanche au gaz avec l'enveloppe de protection avant la réalisation de la zone affaiblie (4).

15. Procédé selon l'une des revendications 11 à 14, **caractérisé en ce que** l'enveloppe de protection est évacuée après avoir enveloppé le sac à gaz (2) avec l'enveloppe de protection.
